# EUROPEAN PATENT SPECIFICATION

(11) **EP 4 327 644 B1**
(45) Date of publication and mention of the grant of the patent: **26.03.2025**
(21) Application number: 23192862.3
(22) Date of filing: 23.08.2023
(51) Int. Cl.: A01D 57/02

(54) **MONITORING SYSTEM FOR AN AGRICULTURAL HARVESTER REEL ASSEMBLY**
ÜBERWACHUNGSSYSTEM FÜR EINE HASPELANORDNUNG EINER LANDWIRTSCHAFTLICHEN ERNTEMASCHINE
SYSTÈME DE SURVEILLANCE POUR UN RABATTEUR DE MOISSONNEUSE AGRICOLE

(30) Priority: 23.08.2022 US 202263400249 P
(43) Date of publication of application: 28.02.2024
(73) Proprietor: CNH Industrial America LLC, New Holland, PA 17557 (US)
(72) Inventor: HUNT, Cory Douglas, New Holland, 17557 (US)
(74) Representative: CNH Industrial IP Department

(56) References cited:
- US-A1- 2020 275 609
- US-A1- 2021 185 918
- US-A1- 2021 243 954

## Description

### FIELD OF THE INVENTION

The present disclosure relates generally to a monitoring system for an agricultural harvester reel assembly.

### BACKGROUND OF THE INVENTION

A harvester may be used to harvest agricultural crops, such as barley, beans, beets, carrots, corn, cotton, flax, oats, potatoes, rye, soybeans, wheat, or other plant crops. Furthermore, a combine (e.g., combine harvester) is a type of harvester generally used to harvest certain crops that include grain (e.g., barley, corn, flax, oats, rye, wheat, etc.). During operation of a combine, the harvesting process may begin by removing agricultural crops from a field, such as by using a header. The header may cut the agricultural crops and transport the cut crops to a processing system of the combine.

Certain headers include a cutter bar assembly configured to cut a portion of each crop (e.g., a stalk), thereby separating the cut crop from the soil. The cutter bar assembly may extend along a substantial portion of the width of the header at a forward end of the header. The header may also include one or more belts positioned behind the cutter bar assembly relative to the direction of travel of the harvester. The belt(s) are configured to transport the cut crops to an inlet of the processing system. Certain headers include a reel assembly configured to direct the crops cut by the cutter bar assembly toward the belt(s), thereby substantially reducing the possibility of the cut crops falling onto the surface of the field.

Certain reel assemblies include a reel having a rotating structure, multiple bat tubes rotatably coupled to the rotating structure, and multiple tines coupled to each bat tube. The rotating structure is driven to rotate such that the bat tubes move in a circular pattern, and a tine rotation mechanism is configured to drive the bat tubes to rotate relative to the rotating structure. The tines are configured to engage the cut crops and to urge the cut crops to move toward the belt(s). The reel is typically supported by multiple arms extending from a frame of the header. In certain configurations, the reel may be rotatably coupled to sliders, and the sliders may be moved along respective arms to control the fore-aft position of the reel. During operation of the agricultural harvester, an operator may control the rotational speed of the reel, the height of the reel (e.g., by controlling the orientation of the arms), and the fore-aft position of the reel (e.g., by controlling the position of the sliders along the arms), among other agricultural harvester parameters. Unfortunately, the operator may not receive sufficient feedback regarding operation of the reel to effectively control the agricultural harvester parameters, thereby reducing the efficiency of the harvesting operation.

US 2021/243954 A1 discusses, according to its abstract, a computer-controlled method for adjusting a height of a header reel, the method comprising: measuring a rotational speed of the reel; measuring a force opposing rotation of the reel; determining a target load for the reel based on the measured rotational speed and the measured force and a first input; and causing movement of the reel according to the target load based on a change in load on the reel.

### SUMMARY OF THE INVENTION

According to an invention to which the present application relates, a monitoring system for a reel assembly of an agricultural harvester includes a load sensor configured to couple to a non-rotating element of a tine rotation mechanism of the reel assembly. The tine rotation mechanism is configured to drive tines of the reel assembly to rotate relative to a rotating structure of the reel assembly, and the load sensor is configured to output a sensor signal indicative of a mechanism load applied by the tines to the non-rotating element of the tine rotation mechanism. The monitoring system also includes a controller communicatively coupled to the load sensor. The controller includes a memory and a processor, and the controller is configured to receive the sensor signal from the load sensor and to determine a crop load of crops acting on the tines based on the mechanism load.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an embodiment of an agricultural harvester having a header;
FIG. 2 is a perspective view of an embodiment of a header that may be employed within the agricultural harvester of FIG. 1;
FIG. 3 is a perspective view of an embodiment of a tine rotation mechanism that may be employed within the header of FIG. 2;
FIG. 4 is a perspective view of another embodiment of a tine rotation mechanism that may be employed within the header of FIG. 2;
FIG. 5 is another perspective view of the tine rotation mechanism of FIG. 4; and
FIG. 6 is a block diagram of an embodiment of a monitoring system that may be employed within the header of FIG. 2.

### DETAILED DESCRIPTION

One or more specific embodiments of the present disclosure will be described below.

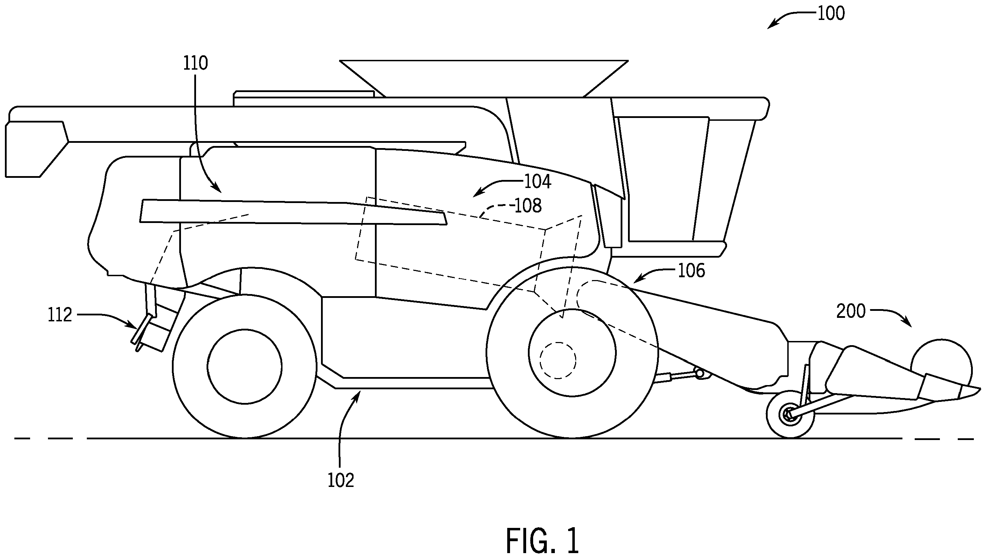

FIG. 1 is a side view of an embodiment of an agricultural harvester 100 having a header 200 (e.g., agricultural header). The agricultural harvester 100 includes a chassis 102 configured to support the header 200 and an agricultural crop processing system 104. As described in greater detail below, the header 200 is configured to cut crops and to transport the cut crops toward an inlet 106 of the agricultural crop processing system 104 for further processing of the cut crops. The agricultural crop processing system 104 receives cut crops from the header 200 and separates desired crop material from crop residue. For example, the agricultural crop processing system 104 may include a thresher 108 having a cylindrical threshing rotor that transports the crops in a helical flow path through the harvester 100. In addition to transporting the crops, the thresher 108 may separate certain desired crop material (e.g., grain) from the crop residue, such as husks and pods, and enable the desired crop material to flow into a cleaning system located beneath the thresher 108. The cleaning system may remove debris from the desired crop material and transport the desired crop material to a storage compartment within the harvester 100. The crop residue may be transported from the thresher 108 to a crop residue handling system 110, which may remove the crop residue from the harvester 100 via a crop residue spreading system 112 positioned at the aft end of the harvester 100.

As discussed in detail below, the header 200 includes a cutter bar assembly configured to cut the crops within the field. The header 200 also includes a reel assembly configured to urge crops cut by the cutter bar assembly to belts that convey the cut crops toward the inlet 106 of the agricultural crop processing system 104. As discussed in detail below, the reel assembly includes a reel having a rotating structure configured to be driven in rotation. The reel also includes multiple bat tubes rotatably coupled to the rotating structure. Furthermore, the reel includes multiple tines coupled to each bat tube. A tine rotation mechanism (e.g., a cam and follower assembly or a parallel state assembly) is configured to drive the bat tubes to rotate in response to rotation of the rotating structure. Accordingly, the tines rotate in a first pattern (e.g., circular pattern) about the rotational axis of the rotating structure and in second patterns (e.g., circular patterns or oscillating patterns) about the rotational axes of respective bat tubes. The tines are configured to engage the cut crops and to urge the cut crops to move toward the belts.

As discussed in detail below, the reel assembly of the header 200 includes a monitoring system configured to determine a load of the cut crops acting on the tines. The monitoring system includes a load sensor (e.g., load cell, strain gauge, etc.) coupled to a non-rotating element of the tine rotation mechanism (e.g., a section of a cam track of the cam and follower assembly or an alignment member of the parallel state assembly). The load sensor is configured to output a sensor signal indicative of a mechanism load applied by the tines to the non-rotating element of the tine rotation mechanism. The monitoring system also includes a controller communicatively coupled to the load sensor. The controller includes a memory and a processor, and the controller is configured to receive the sensor signal from the load sensor. The controller is also configured to determine a crop load of the cut crops acting on the tines based on the mechanism load. **In** certain embodiments, the controller may output an output signal indicative of the crop load to a user interface, and the user interface may present an indication of the crop load to the operator. The operator may then control operation of the agricultural harvester based on the crop load, thereby increasing the efficiency of the harvesting process. Additionally or alternatively, the controller may automatically control at least one parameter of the agricultural harvester based on the crop load. As used herein with regard to the non-rotating element, "non-rotating" refers to an element that does not rotate with the rotating structure of the reel. For example, the non-rotating element does not include a bat tube or a tine because the bat tubes and the tines rotate with the rotating structure.

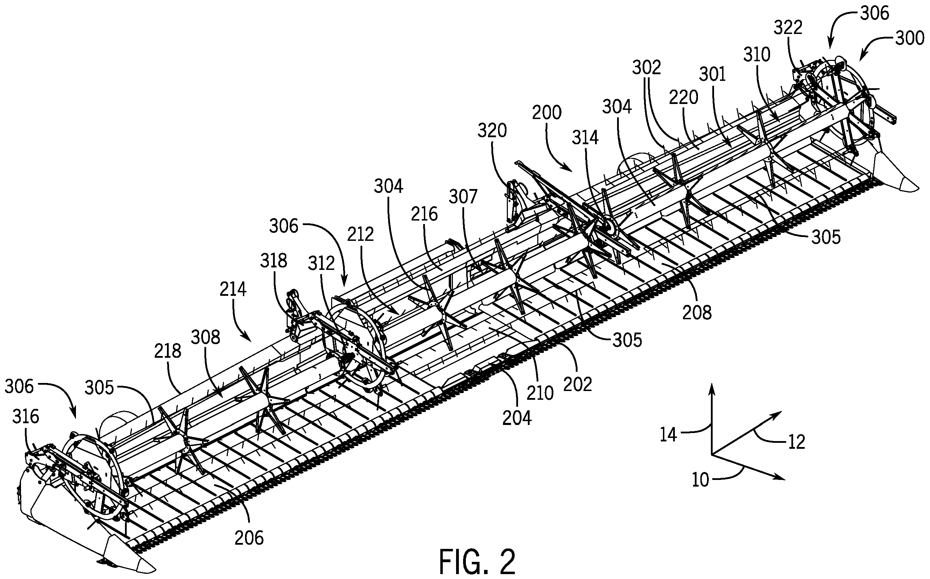

FIG. 2 is a perspective view of an embodiment of a header 200 that may be employed within the agricultural harvester of FIG. 1. In the illustrated embodiment, the header 200 includes a cutter bar assembly 202 configured to cut a portion of each crop (e.g., a stalk), thereby separating the crop from the soil. The cutter bar assembly 202 is positioned at a forward end of the header 200 relative to a longitudinal axis 10 of the header 200. As illustrated, the cutter bar assembly 202 extends along a substantial portion of the width of the header 200 (e.g., the extent of the header 200 along a lateral axis 12). The cutter bar assembly includes a blade support, a stationary guard assembly, and a moving blade assembly. The moving blade assembly is fixed to the blade support (e.g., above the blade support along a vertical axis 14 of the header 200), and the blade support/moving blade assembly is driven to oscillate relative to the stationary guard assembly. In the illustrated embodiment, the blade support/moving blade assembly is driven to oscillate by a driving mechanism 204 positioned at the lateral center of the header 200. However, in other embodiments, the blade support/moving blade assembly may be driven by another suitable mechanism (e.g., located at any suitable position on the header). As the harvester is driven through a field, the cutter bar assembly 202 engages crops within the field, and the moving blade assembly cuts the crops (e.g., the stalks of the crops) in response to engagement of the cutter bar assembly 202 with the crops.

In the illustrated embodiment, the header 200 includes a first lateral belt 206 on a first lateral side of the header 200 and a second lateral belt 208 on a second lateral side of the header 200, opposite the first lateral side. Each belt is driven to rotate by a suitable drive mechanism, such as an electric motor or a hydraulic motor. The first lateral belt 206 and the second lateral belt 208 are driven such that the top surface of each belt moves laterally inward. In addition, the header 200 includes a longitudinal belt 210 positioned between the first lateral belt 206 and the second lateral belt 208 along the lateral axis 12. The longitudinal belt 210 is driven to rotate by a suitable drive mechanism, such as an electric motor or a hydraulic motor. The longitudinal belt 210 is driven such that the top surface of the longitudinal belt 210 moves rearwardly along the longitudinal axis 10.

In the illustrated embodiment, the crops cut by the cutter bar assembly 202 are directed toward the belts by a reel assembly 300 (e.g., agricultural harvester reel assembly), thereby substantially reducing the possibility of the cut crops falling onto the surface of the field. The reel assembly 300 includes a reel 301 having multiple tines 302. The reel assembly 300 also includes a rotating structure 304 that is driven to rotate (e.g., by one or more electric motors, by one or more hydraulic motors, etc.). Furthermore, the reel 301 includes multiple bat tubes 305 rotatably coupled to the rotating structure 304, and a respective set of tines 302 is coupled to each bat tube 305. The reel assembly 300 includes tine rotation mechanism(s) 306 (e.g., cam and follower assembly/assemblies or parallel state assembly/assemblies). For example, the reel assembly 300 may include a tine rotation mechanism 306 for each section of the reel. Each tine rotation mechanism 306 is configured to drive the bat tubes 305 to rotate relative to the rotating structure 304 (e.g., in response to rotation of the rotating structure 304). Accordingly, the tines 302 rotate in a first pattern (e.g., circular pattern) about the rotational axis of the rotating structure 304 and in second patterns (e.g., circular patterns or oscillating patterns) about the rotational axes of respective bat tubes 305. The tines are configured to engage the cut crops and to urge the cut crops to move toward the belts. The cut crops that contact the top surface of the lateral belts are driven laterally inwardly to the longitudinal belt due to the movement of the lateral belts. In addition, the cut crops that contact the longitudinal belt 210 and the cut crops provided to the longitudinal belt by the lateral belts are driven rearwardly along the longitudinal axis 10 due to the movement of the longitudinal belt 210. Accordingly, the belts move the cut agricultural crops through an opening 212 in the header 200 to the inlet of the agricultural crop processing system.

In the illustrated embodiment, the cutter bar assembly 202 is flexible along the width of the header 200 (e.g., the extent of the header 200 along the lateral axis 12). The cutter bar assembly 202 is supported by multiple arm assemblies distributed along the width of the header 200 (e.g., along the lateral axis 12 of the header 200). Each arm assembly is mounted to a frame 214 of the header 200 and includes an arm configured to rotate about the lateral axis 12 and/or move along the vertical axis 14 relative to the frame. Each rotatable/movable arm is coupled to the cutter bar assembly 202, thereby enabling the cutter bar assembly 202 to flex during operation of the harvester. The flexible cutter bar assembly may follow the contours of the field, thereby enabling the cutting height (e.g., the height at which each crop is cut) to be substantially constant along the width of the header 200 (e.g., the extent of the header 200 along the lateral axis 12).

In the illustrated embodiment, the frame 214 is divided into multiple sections that are pivotally coupled to one another, thereby increasing the flexibility of the cutter bar assembly 202. As illustrated, the frame 214 includes a center section 216, a first wing section 218 positioned on a first lateral side of the center section 216 (e.g., along the lateral axis 12), and a second wing section 220 positioned on a second lateral side of the center section 216, opposite the first lateral side (e.g., along the lateral axis 12). The first wing section 218 and the second wing section 220 are each pivotally coupled to the center section 216 by a respective pivot joint. As a result, a flexible frame 214 is formed, thereby increasing the flexibility of the cutter bar assembly 202.

In the illustrated embodiment, the reel 301 includes multiple sections coupled to one another by pivot joints to enable the reel 301 to flex with the header frame. Each section of the reel 301 includes a respective section of the rotating structure 304, respective bat tubes 305 coupled to the respective section of the rotating structure 304, and respective tines 302 coupled to the respective bat tubes 305. In addition, each section of the reel 301 is associated with a respective tine rotation mechanism 306 configured to drive the respective bat tubes 305 to rotate relative to the respective section of the rotating structure 304 (e.g., in response to rotation of the respective section of the rotating structure 304). As illustrated, the reel 301 includes a center section 307 (e.g., positioned forward of the center section 216 of the header frame 214 along the longitudinal axis 10), a first wing section 308 (e.g., positioned forward of the first wing section 218 of the header frame 214 along the longitudinal axis 10), and a second wing section 310 (e.g., positioned forward of the second wing section 220 of the header frame 214 along the longitudinal axis 10). The section of the rotating structure 304 of the first wing section 308 is pivotally coupled to the section of the rotating structure 304 of the center section 307 by a first pivot joint 312, and the section of the rotating structure 304 of the second wing section 310 is pivotally coupled to the section of the rotating structure 304 of the center section 307 by a second pivot joint 314. As a result, a flexible reel 301 is formed, thereby enabling the reel 301 to flex with the header frame 214.

In the illustrated embodiment, the first wing section 308 of the reel 301 is supported by a first arm 316 coupled to the first wing section 218 of the frame 214, the center section 307 of the reel 301 is supported by a second arm 318 and a third arm 320 each coupled to the center section 216 of the frame 214, and the second wing section 310 of the reel 301 is supported by a fourth arm 322 coupled to the second wing section 220 of the frame 214. In certain embodiments, an actuator is coupled to each arm and configured to drive the arm to rotate about the respective local lateral axis, thereby controlling a position of the reel 301 relative to the frame 214 along the vertical axis 14 (e.g., to control engagement of the tines with the cut agricultural crops).

While the header frame 214 and the reel 301 have three sections in the illustrated embodiment, in other embodiments, the header frame and the reel may have more or fewer sections. For example, the header frame and the reel may have 2, 4, 5, 6, or more sections, in which the header frame sections are pivotally coupled to one another, and the reel sections are pivotally coupled to one another. Furthermore, in certain embodiments, the header may have a single section, and the reel may have a single section. **In** such embodiments, the reel may be supported by two arms positioned on opposite lateral sides of the header frame. Additionally or alternatively, the cutter bar may be substantially rigid along the width of the header.

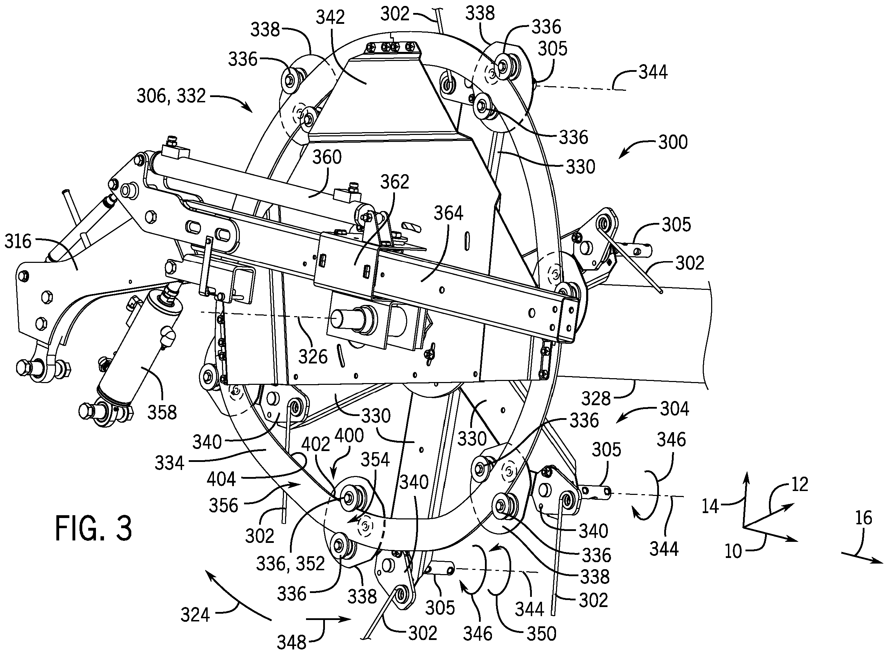

FIG. 3 is a perspective view of an embodiment of a tine rotation mechanism 306 that may be employed within the header of FIG. 2. As previously discussed, the rotating structure 304 is driven to rotate (e.g., by one or more electric motors, by one or more hydraulic motors, etc.). Accordingly, the rotating structure 304 rotates in a first rotational direction 324 about a rotational axis 326 of the rotating structure 304 as the agricultural harvester moves along a forward direction of travel 16 through an agricultural field. As such, the tines 302, which are coupled to the rotating structure 304, are driven to rotate in a circular pattern (e.g., first pattern) about the rotational axis 326 of the rotating structure 304. In the illustrated embodiment, the rotating structure 304 includes a main shaft 328, and the rotating structure 304 includes multiple arms 330 coupled to the main shaft 328 and extending radially outward from the main shaft 328. A bat tube 305 is rotatably coupled to each arm 330, and tines 302 are coupled to each bat tube 305. Accordingly, as the rotating structure 304 is driven to rotate, the bat tubes 305 are driven to move in the first rotational direction 324, thereby driving the tines 302 to rotate in the circular pattern (e.g., first pattern).

The tine rotation mechanism 306 is configured to drive the bat tubes 305 to rotate relative to the rotating structure 304 in response to rotation of the rotating structure 304. In the illustrated embodiment, the tine rotation mechanism 306 includes a cam and follower assembly 332. The cam and follower assembly 332 includes a cam track 334 and rollers 336 configured to engage the cam track 334. The cam and follower assembly 332 also includes supports 338, and a pair of rollers 336 is rotatably coupled to each support 338. Accordingly, each support 338 is movably coupled to the cam track 334 and configured to move along the cam track 334. In addition, the cam and follower assembly 332 includes links 340, and each link 340 is non-rotatably coupled to a respective bat tube 305. As previously discussed, each bat tube 305 is rotatably coupled to a respective arm 330 of the rotating structure 304. Accordingly, each link 340 is rotatably coupled to the rotating structure 304 via the respective bat tube 305. Each link 340 is also rotatably coupled to a respective support 338. Furthermore, the cam track 334 is non-rotatably coupled to a support member 342 of the reel assembly 300. Accordingly, the cam track 334 does not rotate with the rotating structure 304.

As the rotating structure 304 is driven to rotate in the first rotational direction 324, the bat tubes 305 rotate about the rotational axis 326 of the rotating structure 304, thereby driving the links 340 to rotate about the rotational axis 326 of the rotating structure 304. In addition, due to the rotatable coupling between each link 340 and the respective support 338, rotation of the links 340 about the rotational axis 326 drives the supports 338 to move along the cam track 334 generally in the first rotational direction 324. Due to the shape and location of the cam track 334, the supports 338 move along a different path than the bat tubes 305 as the rotating structure 304 rotates. Accordingly, movement of each support 338 along the cam track 334 drives the respective link 340 to rotate about a rotational axis 344 of a respective bat tube 305, thereby driving the respective bat tube 305 to rotate about the rotational axis 344 of the respective bat tube 305. As a result, the tines 302 rotate in oscillating patterns (e.g., second patterns) about respective bat tube rotational axes 344. In the illustrated embodiment, in response to rotation of the rotating structure 304 in the first rotational direction 324 about the rotating structure rotational axis 326, the cam and follower assembly 332 drives the tines 302 to rotate in a second rotational direction 346 about the respective bat tube rotational axes 344 at least while the tines 302 are positioned to engage the cut crops. Accordingly, the tines 302 positioned to engage the cut crops urge the cut crops toward the belts.

As the tines 302 positioned at a lower portion of the reel engage the cut crops, the cut crops provide a resistance to rotation of the tines 302 in the second rotational direction 346. For example, the cut crops apply a force 348 to the tines 302 along a direction of movement of the tines 302, thereby urging the tines 302 to rotate in a third rotational direction 350 about the respective bat tube rotational axis 344. Due to the coupling of the tines 302 to the respective bat tube 305 and the non-rotatable coupling of the respective bat tube 305 to the respective link 340, the respective link 340 is urged to rotate in the third rotational direction 350. In addition, due to the rotatable coupling between the respective link 340 and the respective support 338 and the rotatable coupling between a respective inner roller 352 of the rollers 336 and the respective support 338, the respective inner roller 352 is urged toward the cam track 334, thereby establishing a contact force between the respective inner roller 352 and the cam track that blocks downward movement of the respective support 338 and blocks rotation of the respective link 340, the respective bat tube 305, and the respective tines 302 in the third rotational direction 350. Accordingly, the contact force between the respective inner roller 352 and the cam track 334 is based on the force 348 applied by the cut crops to the respective tines 302.

**In** the illustrated embodiment, the reel assembly 300 includes a monitoring system 400 configured to determine a crop load of the crops acting on the tines 302. The monitoring system 400 includes a load sensor 402 coupled to a section 354 of the cam track 334 (e.g., non-rotating element) of the cam and follower assembly 332 (e.g., tine rotation mechanism 306). The load sensor 402 is configured to output a sensor signal indicative of a mechanism load applied by the tines 302 to the section 354 of the cam track 334 of the cam and follower assembly 332. In the illustrated embodiment, the mechanism load corresponds to the contact force between the inner roller 352 and the section 354 of the cam track 334 (e.g., because the force 348 applied by the cut crops to the tines 302 causes the tines 302 to apply the mechanism load to the section 354 of the cam track 334 via the bat tube 305, the link 340, the support 338, and the inner roller 352). As discussed in detail below, the monitoring system 400 also includes a controller communicatively coupled to the load sensor 402, in which the controller includes a memory and a processor. The controller is configured to receive the sensor signal from the load sensor 402, and the controller is configured to determine a crop load of crops (e.g., cut crops) acting on the tines 302 (e.g., the force 348 applied by the cut crops to the tines 302) based on the mechanism load. For example, the controller may determine the crop load based on the mechanism load and the geometry of the cam and follower assembly, the position of the respective tines, the orientation of the respective tines, the position of the respective bat tube, the position of the respective link, the orientation of the respective link, the position of the respective support, other suitable parameter(s), or a combination thereof.

In the illustrated embodiment, the monitoring system 400 includes a second load sensor 404 coupled to a second section 356 of the cam track 334 of the cam and follower assembly 332 (e.g., tine rotation mechanism 306). The second load sensor 404 is configured to output a second sensor signal indicative of a second mechanism load applied by the tines 302 to the second section 356 of the cam track 334 of the cam and follower assembly 332. In the illustrated embodiment, the second mechanism load corresponds to the contact force between the inner roller 352 and the second section 356 of the cam track 334 (e.g., because the force 348 applied by the cut crops to the tines 302 causes the tines 302 to apply the mechanism load to the second section 356 of the cam track 334 via the bat tube 305, the link 340, the support 338, and the inner roller 352). Furthermore, the controller is configured to receive the second sensor signal, and the controller is configured to determine a second crop load of crops (e.g., cut crops) acting on the tines 302 (e.g., the force 348 applied by the cut crops to the tines 302) based on the second mechanism load. In certain embodiments, the controller is configured to determine a maximum crop load based on the first determined crop load and the second determined crop load (e.g., the maximum of the first and second crop loads). While the monitoring system 400 includes two load sensors in the illustrated embodiment, in other embodiments, the monitoring system may include more or fewer load sensors (e.g., 1, 3, 4, 5, 6, or more), in which each load sensor is coupled to a respective section of the cam track. In embodiments having multiple load sensors, the controller may determine the maximum crop load based on the crop loads determined based on feedback from the load sensors (e.g., the maximum of the determined crop loads).

In certain embodiments, at least one load sensor includes a load cell configured to engage the inner roller 352 of the cam and follower assembly 332. Accordingly, as the inner roller 352 moves along the cam track 334, the inner roller 352 applies the contact force to the respective section of the cam track 334 via the load cell, thereby compressing the load cell between the inner roller 352 and the respective section of the cam track 334. As a result, the load cell outputs the respective sensor signal indicative of the respective mechanism load. While load cell(s) configured to engage the inner roller 352 (e.g., positioned on the inner surface of the cam track 334) are disclosed above, in certain embodiments, one or more load cells may be configured to engage the outer roller (e.g., alone or in combination with the load cell(s) configured to engage the inner roller). The load cell(s) configured to engage the outer roller may be positioned on the outer surface of the cam track 334. In certain embodiments including a first load cell configured to engage the inner roller and a second load cell configured to engage the outer roller, the controller may be configured to receive sensor signals from the first and second load cells, and the controller may be configured to determine the crop load of crops acting on the respective tines based on the difference between the load monitored by the first load cell and the load monitored by the second load cell (e.g., to offset the load that is not applied by the respective tines).

The circumferential extent of each load cell may be selected such that only one roller is in contact with the load cell during rotation of the rotating structure, thereby enabling the load cell to monitor the mechanism load for the tines coupled to a single respective bat tube. Furthermore, due to the circumferential extent of each load cell, the load cell may output multiple sensor signals indicative of multiple respective mechanism loads as the roller moves along the load cell. Accordingly, the controller may determine multiple crop loads based on the respective mechanism loads, or the controller may determine a single crop load for the respective tines (e.g., based on an average of the mechanism loads, based on a maximum of the mechanism loads, based on one mechanism load, etc.).

In certain embodiments, at least one load sensor may include a strain gauge coupled to a respective section of the cam track. The strain gauge is configured to monitor deformation of the respective section of the cam track in response to contact with the roller (e.g., inner roller or outer roller). As a result, the strain gauge may output the respective sensor signal indicative of the respective mechanism load. In certain embodiments, each section of the cam track coupled to a respective strain gauge may be independently coupled to the support member (e.g., as compared to an adjacent section of the cam track) to enhance the accuracy of the deformation monitoring. Furthermore, the circumferential extent of each cam track section may be selected such that only one roller is in contact with the cam track section during rotation of the rotating structure, thereby enabling the strain gauge to monitor the mechanism load for the tines coupled to a single respective bat tube. In addition, due to the circumferential extent of each cam track section, the strain gauge may output multiple sensor signals indicative of multiple respective mechanism loads as the roller moves along the cam track section. Accordingly, the controller may determine multiple crop loads based on the respective mechanism loads, or the controller may determine a single crop load for the respective tines (e.g., based on an average of the mechanism loads, based on a maximum of the mechanism loads, based on one mechanism load, etc.). While load cell(s) coupled to surface(s) of the cam track and strain gauge(s) coupled to cam track section(s) are disclosed above, at least one load sensor may include any other sensor suitable for monitoring the respective mechanism load (e.g., a load cell coupled to an independently mounted cam track section and to the support member, etc.).

In certain embodiments, the controller may be configured to determine the crop loads over one rotation of the rotating structure. For example, as each roller (e.g., inner roller or outer roller) engages each load cell/cam track section coupled to a strain gauge, the controller may determine a respective crop load of crops acting on the respective tines based on the respective mechanism load. The controller may determine the crop loads over one rotation of the rotating structure, thereby establishing a list of crop loads, in which each crop load of the list corresponds to the crop load of crops acting on the tines coupled to a respective bat tube. In certain embodiments, the controller is configured to determine the maximum crop load within the list of crop loads. Additionally or alternatively, the controller may determine the maximum crop load over a selected time period.

While the monitoring system 400 includes load sensors coupled to the cam track 334 of one cam and follower assembly 332/tine rotation mechanism 306 in the illustrated embodiment, in certain embodiments, the monitoring system may include load sensor(s) coupled to one or more other cam and follower assemblies/tine rotation mechanisms of the reel assembly. For example, as previously discussed, the reel assembly may include a tine rotation mechanism for each section of the reel. Accordingly, in certain embodiments, the monitoring system may include at least one load sensor coupled to the cam track of each cam and follower assembly/tine rotation mechanism. The controller may determine the crop load(s)/maximum crop load for each section of the reel. Furthermore, in certain embodiments, the controller may be configured to determine the maximum crop load for the reel based on the determined crop load(s)/maximum crop load for each section of the reel. Because the load sensor(s) are coupled to the cam track(s) (e.g., non-rotating element(s)) of the cam and follower assembly/assemblies (e.g., tine rotation mechanism(s)), the crop load(s) may be determined without mounting a sensor to a rotating element of the reel assembly (e.g., element that rotates with the rotating structure), thereby reducing the complexity of the monitoring system (e.g., by obviating slip ring(s), etc.), which may reduce costs and/or increase reliability.

In certain embodiments, the monitoring system 400 includes a user interface communicatively coupled to the controller. In such embodiments, the controller is configured to output one or more output signals indicative of the crop load(s) and/or the maximum crop load, in embodiments in which a maximum crop load is determined, to the user interface. The user interface may present an indication of the crop load(s)/maximum crop load (e.g., a visual indication on a display of the user interface, etc.) in response to receiving the output signal(s). The operator, in turn, may view the indication(s) and control one or more parameters of the agricultural harvester based on the crop load(s)/maximum crop load. Furthermore, in certain embodiments, the controller may automatically control one or more parameters of the agricultural harvester based on the crop load(s)/maximum crop load.

In certain embodiments, the parameters of the agricultural harvester controlled by the operator and/or the controller may include a rotational speed of the reel, a height of the reel, a fore/aft position of the reel, other suitable parameter(s), or a combination thereof. The rotating structure 304 of the reel assembly 300 is driven to rotate by one or more electric motors, one or more hydraulic motors, one or more other suitable drive units, or a combination thereof. In certain embodiments, the controller is communicatively coupled to the motor(s)/drive unit(s) and configured to control the motor(s)/drive unit(s) based on the crop load(s)/maximum crop load to control the rotational speed of the reel. Furthermore, as previously discussed, a reel height actuator 358 (e.g., hydraulic actuator, pneumatic actuator, electromechanical actuator, etc.) may be coupled to each arm that supports the reel (e.g., the first arm 316, as illustrated). The reel height actuator(s) 358 may be configured to drive the arm(s) to rotate about respective local lateral axis/axes, thereby controlling the position of the reel relative to the header frame along the vertical axis 14. In certain embodiments, the controller is communicatively coupled to the reel height actuator(s) 358 and configured to control the reel height actuator(s) 358 based on the crop load(s)/maximum crop load to control the position of the reel relative to the header frame along the vertical axis 14. In addition, a reel fore/aft position actuator 360 may drive the reel to move forwardly and rearwardly (e.g., generally along the longitudinal axis 10). In the illustrated embodiment, the rotating structure 304 of the reel is pivotally coupled to a slider 362, and the slider 362 is configured to move along a tube 364 of the first arm 316. In addition, the reel fore/aft position actuator 360 is coupled to the first arm 316 and to the slider 362. Accordingly, the reel fore/aft position actuator 360 is configured to drive the slider 362 to move along the tube 364 to control the fore/aft position of the reel (e.g., the position of the reel generally along the longitudinal axis 10). Additional reel fore/aft position actuator(s) may be configured to drive respective slider(s) along the tube(s) of other respective arm(s) of the reel assembly. In certain embodiments, the controller is communicatively coupled to the reel fore/aft position actuator(s) 360 and configured to control the reel fore/aft position actuator(s) 360 based on the crop load(s)/maximum crop load to control the fore/aft position of the reel relative to the header frame (e.g., generally along the longitudinal axis 10).

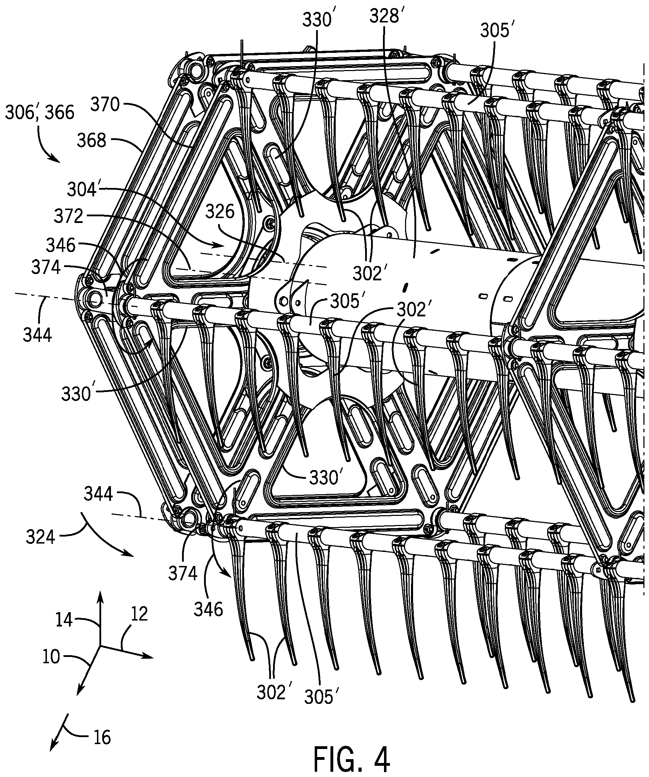

FIG. 4 is a perspective view of another embodiment of a tine rotation mechanism 306' that may be employed within the header of FIG. 2. As previously discussed, the rotating structure 304' is driven to rotate (e.g., by one or more electric motors, by one or more hydraulic motors, etc.). Accordingly, the rotating structure 304' rotates in the first rotational direction 324 about the rotational axis 326 of the rotating structure 304' as the agricultural harvester moves along the forward direction of travel 16 through an agricultural field. As such, the tines 302', which are coupled to the rotating structure 304', are driven to rotate in a first circular pattern about the rotational axis 326 of the rotating structure 304'. In the illustrated embodiment, the rotating structure 304' includes a main shaft 328', and the rotating structure 304' includes multiple arms 330' coupled to the main shaft 328' and extending radially outward from the main shaft 328'. A bat tube 305' is rotatably coupled to each arm 330', and tines 302' are coupled to each bat tube 305'. Accordingly, as the rotating structure 304' is driven to rotate, the bat tubes 305' are driven to move in the first rotational direction 324, thereby driving the tines 302' to rotate in the first circular pattern.

The tine rotation mechanism 306' is configured to drive the bat tubes 305' to rotate relative to the rotating structure 304' in response to rotation of the rotating structure 304'. In the illustrated embodiment, the tine rotation mechanism 306' includes a parallel state assembly 366. The parallel state assembly 366 includes an adjustment wheel 368 configured to drive the bat tubes 305' to rotate relative to the rotating structure 304'. In addition, the arms 330' are part of a main wheel 370, which is part of the rotating structure 304', and the adjustment wheel 368 and the main wheel 370 have substantially the same size and shape (e.g., the adjustment wheel 368 may be the same as the main wheel 370). However, while the main wheel 370 is configured to rotate about the rotational axis 326 of the rotating structure 304', the adjustment wheel 368 is configured to rotate about a second rotational axis 372, which is offset from the rotational axis 326 of the rotating structure 304'.

In addition, the parallel state assembly 366 includes links 374, in which each link 374 is non-rotatably coupled to a respective bat tube 305' and rotatably coupled to the adjustment wheel 368. Because the links 374 non-rotatably coupled to the bat tubes 305' and the bat tubes '305 are rotatably coupled to the arms 330' of the main wheel 370, rotation of the rotating structure 304' drives the links 374 to rotate in the first circular pattern about the rotational axis 326 of the rotating structure 304'. Furthermore, because the links 374 are rotatably coupled to the adjustment wheel 368, rotation of the links 374 in the first circular pattern about the rotational axis 326 of the rotating structure 304' drives the adjustment wheel 368 to rotate in the first rotational direction 324 about the second rotational axis 372 of the adjustment wheel 368. Due to the offset between the rotational axis 326 of the rotating structure 304' and the second rotational axis 372 of the adjustment wheel 368, rotation of the adjustment wheel 368 and the main wheel 370 drives the links 374 to rotate in the second rotational direction 346 relative to the adjustment wheel 368. In addition, due to the non-rotatable coupling between the links 374 and the respective bat tubes 305', rotation of the links 374 drives the respective bat tubes 305' to rotate in the second rotational direction 346. As a result, the tines 302' rotate in the second circular pattern about the respective bat tube rotational axes 344. Accordingly, the parallel state assembly 366 is configured to drive the tines 302' to rotate in the second rotational direction 346 about the respective bat tube rotational axes 344 in response to rotation of the rotating structure 304' in the first rotational direction 324 about the rotating structure rotational axis 326. As the tines 302' rotate in the first and second circular patterns, the tines 302' positioned at the lower portion of the reel engage the cut crops and urge the cut crops toward the belts.

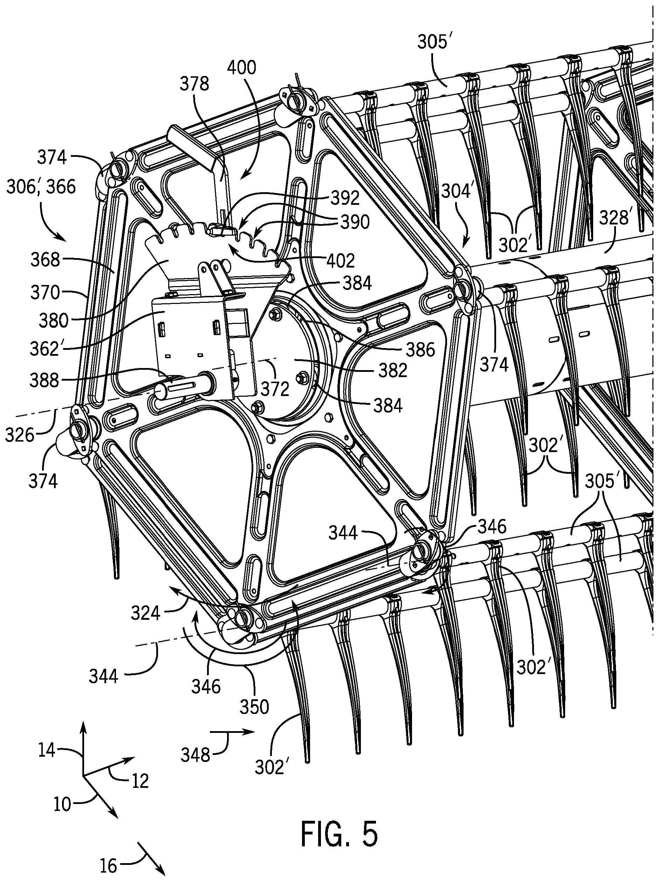

FIG. 5 is another perspective view of the tine rotation mechanism 306' of FIG. 4. In the illustrated embodiment, the parallel state assembly 366 includes a handle 378 (e.g., alignment member) configured to adjust (e.g., establish) a circumferential position of the second rotational axis 372 of the adjustment wheel 368 about the rotational axis 326 of the main wheel 370/rotating structure 304'. The parallel state assembly 366 also includes an engagement assembly 380 configured to secure the handle 378 in multiple positions (e.g., to couple the engagement assembly to the handle). In the illustrated embodiment, the handle 378 is non-rotatably coupled to a center plate 382, and the adjustment wheel 368 is configured to rotate about the center plate 382. Accordingly, the center plate 382 establishes the second rotational axis 372 of the adjustment wheel 368. Multiple bearings 384 are coupled to the center plate 382, and an inner surface 386 of the adjustment wheel 368 is configured to engage the bearings 384, thereby enabling the adjustment wheel 368 to rotate about the center plate 382. In addition, an axle 388 is coupled to the center plate 382, and the rotating structure 304' is configured to rotate about the axle 388. Accordingly, the axle 388 establishes the rotational axis 326 of the rotating structure 304'. Furthermore, the engagement assembly 380 is coupled to the axle 388.

Because the handle 378 is non-rotatably coupled to the center plate 382, rotation of the handle relative to the engagement assembly 380 drives the center plate 382 to rotate about the rotational axis 326 of the rotating structure 304'. As a result, the second rotational axis 372 of the adjustment wheel 368 is driven to move circumferentially about the rotational axis 326 of the rotating structure 304', thereby adjusting the offset between the rotational axis 326 of the rotating structure '304 and the rotational axis 372 of the adjustment wheel 368. Accordingly, the relationship between the rotation of the rotating structure 304' and the rotation of the bat tubes 305' is varied due to the connection between the bat tubes 305' and the adjustment wheel 368 via the links 374.

As the tines 302' positioned at the lower portion of the reel engage the cut crops, the cut crops provide a resistance to rotation of the tines 302' in the second rotational direction 346. For example, with regard to each bat tube 305', the cut crops apply a force 348 to the respective tines 302' along a direction of movement of the tines 302', thereby urging the tines 302' to rotate in the third rotational direction 350 about the respective bat tube rotational axis 344. Due to the coupling of the tines 302' to the respective bat tube 305' and the non-rotatable coupling of the respective bat tube 305' to the respective link 374, the respective link 374 is urged to rotate in the third rotational direction 350. In addition, due to the rotatable coupling between the respective link 374 and the adjustment wheel 368, a radial force (e.g., a radially inward force) is applied to the adjustment wheel 368, which is transferred through at least one of the bearings 384 to the center plate 382. Because the radial force is directed through the center of the center plate 382, which corresponds to the second rotational axis 372 of the adjustment wheel 368, and the second rotational axis 372 of the adjustment wheel 368 is offset from the rotational axis 326/axle 388, the center plate 382 is urged to rotate about the rotational axis 326 /axle 388, thereby urging the handle 378, which is non-rotatably coupled to the center plate 382, to rotate relative to the engagement assembly 380. However, rotation of the handle 378 relative to the engagement assembly 380 is blocked by engagement of the handle 378 with the engagement assembly 380. Accordingly, the force 348 applied by the cut crops to the respective tines 302' establishes a contact force between the handle 378 and the engagement assembly 380. As such, the contact force between the handle 378 and the engagement assembly 380 is based on the force 348 applied by the cut crops to the respective tines 302'. In certain embodiments, the tines 302' coupled to multiple bat tubes 305' may be engaged with the cut crops. In such embodiments, the contact force between the handle 378 and the engagement assembly 380 may be based on the cumulative force applied by the cut crops to the tines 302' coupled to the multiple bat tubes 305'.

In the illustrated embodiment, the handle 378 is configured to engage the engagement assembly 380 via one of multiple notches 390 of the engagement assembly 380. Engagement of the handle 378 with one of the notches 390 blocks rotation of the handle 378 relative to the engagement assembly 380. In the illustrated embodiment, the handle 378 includes a latch 392 configured to selectively engage one of the notches 390. Accordingly, while the latch 392 is engaged with a respective notch 390, the contact force between the handle 378 and the engagement assembly 380 is located at the contact area between the latch 392 and a side wall that forms the respective notch 390. To rotate the handle 378 relative to the engagement assembly 380, the latch 392 may be disengaged from the respective notch 390, the handle 378 may be rotated to align the latch 392 with a selected notch 390, and the latch 392 may be engaged with the selected notch 390. While rotation of the handle 378 relative to the engagement assembly 380 is selectively blocked by the notch 390/latch 392 assembly in the illustrated embodiment, in other embodiments, rotation of the handle 378 may be blocked by another suitable assembly (e.g., a pin and aperture assembly, a rotating latch assembly, or another suitable assembly). Furthermore, while a cam and follower assembly and a parallel state assembly are disclosed herein, in certain embodiments, the tine rotation mechanism may include any other suitable mechanism configured to drive the tines to rotate relative to the rotating structure.

In the illustrated embodiment, the reel assembly includes a monitoring system 400 configured to determine a crop load of the crops acting on the tines 302'. The monitoring system 400 includes a load sensor 402 coupled to the handle 378 (e.g., non-rotating element, alignment member) or the engagement assembly 380 (e.g., non-rotating element) of the parallel state assembly 366 (e.g., tine rotation mechanism 306'). The load sensor 402 is configured to output a sensor signal indicative of a mechanism load applied by the tines 302' to the handle 378 (e.g., alignment member) or to the engagement assembly 380 of the parallel state assembly 366. In the illustrated embodiment, the mechanism load corresponds to the contact force between the handle 378 and the engagement assembly 380 (e.g., because the force 348 applied by the cut crops to the tines 302' causes the tines 302' to apply the mechanism load to the handle 378 and the engagement assembly 380 via the bat tube 305', the link(s) 374, the adjustment wheel 368, the bearing(s) 384, and the center plate 382). As discussed in detail below, the monitoring system 400 also includes a controller communicatively coupled to the load sensor 402, in which the controller includes a memory and a processor. The controller is configured to receive the sensor signal from the load sensor 402, and the controller is configured to determine a crop load of crops (e.g., cut crops) acting on the tines 302' (e.g., the force 348 applied by the cut crops to the tines 302') based on the mechanism load. For example, the controller may determine the crop load based on the mechanism load and the geometry of the parallel state assembly, the position of the handle, other suitable parameter(s), or a combination thereof.

In certain embodiments, the load sensor 402 includes a load cell coupled to the handle 378 (e.g., to the latch 392 of the handle 378). Accordingly, the contact force between the handle 378 and the engagement assembly 380 compresses the load cell between the handle 378 (e.g., the latch 392 of the handle 378) and a side wall that forms a respective notch 390. As a result, the load cell outputs the sensor signal indicative of the mechanism load. Furthermore, in certain embodiments, the load sensor 402 may include multiple load cells coupled to the engagement assembly 380. For example, load cells may be coupled to certain side walls that form the notches 390. Accordingly, the contact force between the handle 378 and the engagement assembly 380 compresses a respective load cell between the handle 378 (e.g., the latch 392 of the handle 378) and the side wall that forms a respective notch 390. As a result, one load cell outputs the sensor signal indicative of the mechanism load. In addition, in certain embodiments, the load cell(s) may be coupled to any other suitable area(s) of the handle and/or the engagement assembly to monitor the contact force between the handle and the engagement assembly. Furthermore, in certain embodiments, the load sensor may include a strain gauge coupled to the handle 378 or to the engagement assembly 380. The strain gauge is configured to monitor deformation of the handle/engagement assembly in response to contact between the handle and the engagement assembly. As a result, the strain gauge outputs the sensor signal indicative of the mechanism load. While load cell(s) and a strain gauge coupled to the handle/engagement assembly are disclosed above, the load sensor may include any other sensor(s) suitable for monitoring the respective mechanism load.

In certain embodiments, the load sensor may be coupled to the axle 388 or to the center plate 382. As previously discussed, as the tines 302' positioned at the lower portion of the reel engage the cut crops, the cut crops provide a resistance to rotation of the tines 302' in the second rotational direction 346. For example, with regard to each bat tube 305', the cut crops apply a force 348 to the tines 302' along a direction of movement of the tines 302', thereby urging the tines 302' to rotate in the third rotational direction 350 about the respective bat tube rotational axis 344. Due to the coupling of the tines 302' to the respective bat tube 305' and the non-rotatable coupling of the respective bat tube 305' to the respective link 374, the respective link 374 is urged to rotate in the third rotational direction 350. **In** addition, due to the rotatable coupling between the respective link 374 and the adjustment wheel 368, a radial force (e.g., a radially inward force) is applied to the adjustment wheel 368, which is transferred through at least one of the bearings 384 to the center plate 382. **In** addition to urging the center plate 382 to rotate about the rotational axis 326, the force applied to the center plate 382 is transferred to the axle 388, which blocks movement of the center plate 382. Accordingly, the load sensor may be coupled to the axle 388 or to the center plate 382 and configured to output the sensor signal indicative of the mechanism load applied by the tines 302' to the axle 388 or to the center plate 382. The mechanism load corresponds to the contact force between the axle 388 and the center plate 382 (e.g., because the force 348 applied by the cut crops to the tines 302' causes the tines 302' to apply the mechanism load to the axle 388 and to the center plate 382 via the bat tube 305', the link(s) 374, the adjustment wheel 368, and the bearing(s) 384).

**In** certain embodiments, the controller may be configured to determine the crop loads over one rotation of the rotating structure, thereby establishing a list of crop loads. Each crop load of the list corresponds to the crop load of crops acting on the tines. In certain embodiments, the controller is configured to determine the maximum crop load within the list of crop loads. Additionally or alternatively, the controller may determine the maximum crop load over a selected time period.

While the monitoring system 400 includes load sensor(s) coupled to the handle 378/engagement assembly 380 of one parallel state assembly 366/tine rotation mechanism 306' in the illustrated embodiment, in certain embodiments, the monitoring system may include load sensor(s) coupled to one or more other parallel state assemblies/tine rotation mechanisms of the reel assembly. For example, as previously discussed, the reel assembly may include a tine rotation mechanism for each section of the reel. Accordingly, in certain embodiments, the monitoring system may include at least one load sensor coupled to the handle/engagement assembly of each parallel state assembly/tine rotation mechanism. The controller may determine the crop load(s)/maximum crop load for each section of the reel. Furthermore, in certain embodiments, the controller may be configured to determine the maximum crop load for the reel based on the determined crop load(s)/maximum crop load for each section of the reel. Because the load sensor(s) are coupled to the handle/engagement assembly (e.g., non-rotating element(s)) of the parallel state assembly/assemblies (e.g., tine rotation mechanism(s)), the crop load(s) may be determined without mounting a sensor to a rotating element of the reel assembly (e.g., element that rotates with the rotating structure), thereby reducing the complexity of the monitoring system (e.g., by obviating slip ring(s), etc.), which may reduce costs and/or increase reliability.

As previously discussed, in certain embodiments, the monitoring system 400 includes a user interface communicatively coupled to the controller. In such embodiments, the controller is configured to output one or more output signals indicative of the crop load(s) and/or the maximum crop load, in embodiments in which a maximum crop load is determined, to the user interface. The user interface may present an indication of the crop load(s)/maximum crop load (e.g., a visual indication on a display of the user interface, etc.) in response to receiving the output signal(s). The operator, in turn, may view the indication(s) and control one or more parameters of the agricultural harvester based on the crop load(s)/maximum crop load. Furthermore, in certain embodiments, the controller may automatically control one or more parameters of the agricultural harvester based on the crop load(s)/maximum crop load.

As previously discussed, in certain embodiments, the parameters of the agricultural harvester controlled by the operator and/or the controller may include a rotational speed of the reel, a height of the reel, a fore/aft position of the reel, other suitable parameter(s), or a combination thereof. The rotating structure 304' of the reel assembly is driven to rotate by one or more electric motors, one or more hydraulic motors, one or more other suitable drive units, or a combination thereof. In certain embodiments, the controller is communicatively coupled to the motor(s)/drive unit(s) and configured to control the motor(s)/drive unit(s) based on the crop load(s)/maximum crop load to control the rotational speed of the reel. In addition, a reel fore/aft position actuator may drive the reel to move forwardly and rearwardly (e.g., generally along the longitudinal axis 10). In the illustrated embodiment, the engagement assembly 380 is coupled to a slider 362', and the slider 362' is configured to move along a tube of the first arm. In addition, the reel fore/aft position actuator may be coupled to the first arm and to the slider 362'. Accordingly, the reel fore/aft position actuator is configured to drive the slider 362' to move along the tube to control the fore/aft position of the reel (e.g., the position of the reel generally along the longitudinal axis 10). Additional reel fore/aft position actuator(s) may be configured to drive respective slider(s) along the tube(s) of other respective arm(s) of the reel assembly. **In** certain embodiments, the controller is communicatively coupled to the reel fore/aft position actuator(s) and configured to control the reel fore/aft position actuator(s) based on the crop load(s)/maximum crop load to control the fore/aft position of the reel relative to the header frame (e.g., generally along the longitudinal axis 10). Furthermore, as previously discussed, a reel height actuator (e.g., hydraulic actuator, pneumatic actuator, electromechanical actuator, etc.) may be coupled to each arm that supports the reel. The reel height actuator(s) may be configured to drive the arm(s) to rotate about respective local lateral axis/axes, thereby controlling the position of the reel relative to the header frame along the vertical axis 14. In certain embodiments, the controller is communicatively coupled to the reel height actuator(s) and configured to control the reel height actuator(s) based on the crop load(s)/maximum crop load to control the position of the reel relative to the header frame along the vertical axis 14.

While the parallel state assembly 366 includes a handle 378 configured to adjust the circumferential position of the second rotational axis 372 of the adjustment wheel 368 about the rotational axis 326 of the main wheel 370/rotating structure 304' in the illustrated embodiment, in other embodiments, the parallel state assembly may include another suitable alignment member. For example, in certain embodiments, the alignment member may be non-adjustable and configured to establish a fixed circumferential position of the rotational axis of the adjustment wheel about the rotational axis of the rotating structure. In such embodiments, the alignment member may be non-rotatably coupled to the center plate and non-rotatably coupled to the engagement assembly. Furthermore, in certain embodiments, the alignment member may be non-rotatably coupled to the center plate and coupled to an actuator configured to drive the alignment member to move relative to the engagement assembly. In such embodiments, the actuator may be coupled to the engagement assembly, and the actuator may be configured to drive the alignment member to rotate relative to the engagement assembly to control the relationship between the rotation of the rotating structure and the rotation of the bat tubes. As previously discuss, the load sensor may be coupled to the alignment member and configured to output a sensor signal indicative of a mechanism load applied by the tines to the alignment member.

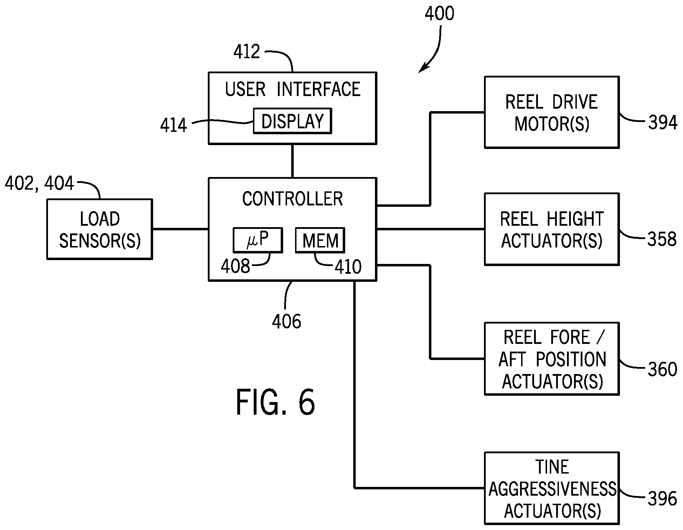

FIG. 6 is a block diagram of an embodiment of a monitoring system 400 that may be employed within the header of FIG. 2. As previously discussed, the monitoring system 400 includes at least one load sensor 402 (e.g., a first load sensor 402 and a second load sensor 404). Each load sensor 402 is configured to couple to a non-rotating element of a tine rotation mechanism, and the load sensor 402 is configured to output a sensor signal indicative of a mechanism load applied by the tines to the non-rotating element of the tine rotation mechanism. For example, as previously discussed, the tine rotation mechanism may include a cam and follower assembly, and the non-rotating element may include a section of a cam track of the cam and follower assembly. Furthermore, as previously discussed, the tine rotation mechanism may include a parallel state assembly, and the non-rotating element may include a handle/alignment member or an engagement assembly of the parallel state assembly.

In the illustrated embodiment, the monitoring system 400 includes a controller 406 communicatively coupled to the load sensor(s) 402, 404. As previously discussed, the controller is configured to receive the sensor signal(s) from the load sensor(s) 402, 404 and to determine a crop load of crops acting on the tines based on the mechanism load. In certain embodiments, the controller 406 is an electronic controller having electrical circuitry configured to process data from the load sensor(s) 402, 404. In the illustrated embodiment, the controller 406 includes a processor, such as the illustrated microprocessor 408, and a memory device 410. The controller 406 may also include one or more storage devices and/or other suitable components. The processor 408 may be used to execute software, such as software for determining the crop load of crops acting on the tines, and so forth. Moreover, the processor 408 may include multiple microprocessors, one or more "general-purpose" microprocessors, one or more special-purpose microprocessors, one or more application specific integrated circuits (ASICS), and/or one or more field-programmable gate arrays (FPGA), or some combination thereof. For example, the processor 408 may include one or more reduced instruction set (RISC) processors.

The memory device 410 may include a volatile memory, such as random access memory (RAM), and/or a nonvolatile memory, such as read-only memory (ROM). The memory device 410 may store a variety of information and may be used for various purposes. For example, the memory device 410 may store processor-executable instructions (e.g., firmware or software) for the processor 408 to execute, such as instructions for determining the crop load of crops acting on the tines, and so forth. The storage device(s) (e.g., nonvolatile storage) may include ROM, flash memory, a hard drive, or any other suitable optical, magnetic, or solid-state storage medium, or a combination thereof. The storage device(s) may store data (e.g., calibration data, etc.), instructions (e.g., software or firmware for determining the crop load, etc.), and any other suitable data.

In the illustrated embodiment, the monitoring system 400 includes a user interface 412 communicatively coupled to the controller 406. The user interface 412 is configured to provide input to the controller 406 and to receive output from the controller 406. As illustrated, the user interface 412 includes a display 414. The display 414 is configured to present information to an operator. In certain embodiments, the display 414 may be a touch screen display configured to receive input from the operator. The user interface 412 may also include other input device(s) (e.g., keyboard, mouse, switches, buttons, etc.) configured to receive input from the operator. In certain embodiments, the controller 406 is configured to output one or more output signals indicative of the crop load(s) and/or the maximum crop load, in embodiments in which a maximum crop load is determined, to the user interface 412. The user interface 412 may present indication(s) (e.g., visual indication(s) on the display 414 of the user interface 412, etc.) of the crop load(s)/maximum crop load in response to receiving the output signal(s). The operator, in turn, may view the indication(s) and control one or more parameters of the agricultural harvester based on the crop load(s)/maximum crop load.

As previously discussed, in certain embodiments, the controller 406 may automatically control one or more parameters of the agricultural harvester based on the crop load(s)/maximum crop load. In certain embodiments, the parameters of the agricultural harvester controlled by the controller may include a rotational speed of the reel, a height of the reel, a fore/aft position of the reel, other suitable parameter(s), or a combination thereof. As previously discussed, the rotating structure of the reel assembly is driven to rotate by one or more electric motors, one or more hydraulic motors, one or more other suitable drive units, or a combination thereof. In the illustrated embodiment, the controller 406 is communicatively coupled to the motor(s)/drive unit(s) 394 and configured to control the motor(s)/drive unit(s) 394 based on the crop load(s)/maximum crop load to control the rotational speed of the reel. For example, if the crop load(s)/maximum crop load exceeds a threshold value/maximum target value, the controller 406 may control the motor(s)/drive unit(s) 394 to reduce the rotational speed of the reel. Additionally or alternatively, if the crop load(s)/maximum crop load is below a threshold value/minimum target value, the controller 406 may control the motor(s)/drive unit(s) 394 to increase the rotational speed of the reel.

Furthermore, as previously discussed, a reel height actuator 358 (e.g., hydraulic actuator, pneumatic actuator, electromechanical actuator, etc.) may be coupled to each arm that supports the reel. The reel height actuator(s) 358 may be configured to drive the arm(s) to rotate about respective local lateral axis/axes, thereby controlling the position of the reel relative to the header frame along the vertical axis. In the illustrated embodiment, the controller 406 is communicatively coupled to the reel height actuator(s) 358 and configured to control the reel height actuator(s) 358 based on the crop load(s)/maximum crop load to control the position of the reel relative to the header frame along the vertical axis. For example, if the crop load(s)/maximum crop load exceeds a threshold value/maximum target value, the controller 406 may control the reel height actuator(s) 358 to increase the height of the reel. Additionally or alternatively, if the crop load(s)/maximum crop load is below a threshold value/minimum target value, the controller 406 may control the reel height actuator(s) 358 to reduce the height of the reel.

In addition, as previously discussed, reel fore/aft position actuator(s) 360 may drive the reel to move forwardly and rearwardly (e.g., generally along the longitudinal axis 10). In certain embodiments, the rotating structure of the reel is pivotally coupled to slider(s), and the slider(s) are configured to move along tube(s) of respective arm(s). In addition, the reel fore/aft position actuator(s) are coupled to the respective arm(s) and to the respective slider(s). Accordingly, the reel fore/aft position actuator(s) 360 are configured to drive the slider(s) to move along the tube(s) to control the fore/aft position of the reel (e.g., the position of the reel generally along the longitudinal axis). In the illustrated embodiment, the controller 406 is communicatively coupled to the reel fore/aft position actuator(s) 360 and configured to control the reel fore/aft position actuator(s) 360 based on the crop load(s)/maximum crop load to control the fore/aft position of the reel relative to the header frame (e.g., generally along the longitudinal axis). For example, if the crop load(s)/maximum crop load exceeds a threshold value/maximum target value, the controller 406 may control the reel fore/aft position actuator(s) 360 to move the reel rearwardly. Additionally or alternatively, if the crop load(s)/maximum crop load is below a threshold value/minimum target value, the controller 406 may control the reel fore/aft position actuator(s) 360 to move the reel forwardly. While the controller is communicatively coupled to and configured to control the reel drive motor(s) 394, the reel height actuator(s) 358, and the reel fore/aft position actuator(s) 360 in the illustrated embodiment, in other embodiments, the controller may only be communicatively coupled to and configured to control a portion of the motor(s)/actuator(s).

Furthermore, in certain embodiments, the controller may be communicatively coupled to and configured to control other suitable motor(s)/actuator(s) based on the crop load(s) (e.g., alone or in combination with the reel drive motor(s), the reel height actuator(s), the reel fore/aft position actuator(s), or a combination thereof). For example, in certain embodiments, the controller may be communicatively coupled to tine aggressiveness actuator(s) 396, and the controller 406 may be configured to control the tine aggressiveness actuator(s) 396 based on the crop load(s) to control tine aggressiveness. In certain embodiments, a tine aggressiveness actuator may extend between the handle/alignment member and the engagement assembly of a parallel state assembly, and the tine aggressiveness actuator may drive the handle/alignment member to rotate relative to the engagement assembly to control the relationship between the rotation of the rotating structure and the rotation of the bat tubes. In addition, in certain embodiments, the controller may be communicatively coupled to a ground speed control system of the agricultural harvester, and the controller may be configured to control the agricultural harvester ground speed based on the crop load(s). Furthermore, in certain embodiments, the controller may be communicatively coupled to thresher rotor motor(s), and the controller may be configured to control the thresher rotor motor(s) based on the crop load(s) to control the rotation speed of the thresher rotor. In certain embodiments, the controller may be communicatively coupled to cleaning fan motor(s), and the controller may be configured to control the cleaning fan motor(s) based on the crop load(s) to control the rotation speed of the cleaning fan.

In certain embodiments, the controller 406 is configured to perform a calibration operation (e.g., in response to user input via the user interface 412) prior to operation of the agricultural harvester. During the calibration process, the controller 406 may control the reel height actuator(s) 358 to move the reel upwardly to a position where the tines do not engage crops. The controller 406 may then control the reel drive motor(s) 394 to drive the reel to rotate. Next, the controller 406 may receive the sensor signal(s) from the load sensor(s) 402, 404 indicative of mechanism load(s) applied by the tines to the non-rotating element of the tine rotation mechanism while the tines are not engaged with the crops. The controller 406 may then determine baseline load(s) in the same manner that the crop load(s) are determined. During operation of the agricultural harvester, the controller may adjust the crop load(s) based on the baseline load(s) (e.g., by subtracting the baseline load(s)). As a result, the accuracy of the crop load(s) may be enhanced.

While determining a maximum crop load based on multiple crop loads (e.g., the crop loads based on feedback from multiple load sensors, the crop loads over one rotation of the rotating structure, the crop loads/maximum crop loads for multiple reel sections, etc.) is disclosed above, in certain embodiments, the controller may determine other suitable property/properties of multiple crop loads. For example, the controller may determine statistical property/properties of the crop loads (e.g., over a selected time period, over one rotation of the rotating structure, etc.), such as a minimum crop load, an average/mean crop load, a median crop load, etc. Furthermore, the controller may determine a crop loading property by adding the crop loads together (e.g., over one rotation of the rotating structure, etc.). The controller may output one or more output signals indicative of the determine property/properties to the user interface, and/or the controller may automatically control one or more parameters of the agricultural harvester based on the determined property/properties.

With regard to the coupling between the load sensor and the non-rotating element of the tine rotation mechanism, "coupled" refers to a physical coupling or a coupling via wave energy. For example, with regard to physical coupling, the load sensor may include a load cell or a strain gauge physically coupled to the non-rotating element of the tine rotation mechanism. Furthermore, with regard to coupling via wave energy, the load sensor may include a passive sensor (e.g., camera, infrared camera, etc.) configured to monitor deformation of the non-rotating element via an image of the non-rotating element (e.g., formed from optical or infrared wave energy), which is indicative of the mechanism load. In addition, with regard to coupling via wave energy, the load sensor may include an active sensor (e.g., ultrasonic sensor, LIDAR sensor, eddy current sensor, etc.) configured to emit wave energy toward the non-rotating element of the tine rotation mechanism and to receive wave energy from the non-rotating element, which is indicative of the mechanism load.

## Claims

1. A reel assembly (300) of an agricultural harvester (100), the reel assembly (300) including a tine rotation mechanism (306), the tine rotation mechanism (306) comprising a non-rotating element, wherein the tine rotation mechanism (306) is configured to drive tines (302) of the reel assembly (300) to rotate relative to a rotating structure (304) of the reel assembly (300), the reel assembly (300) comprising a monitoring system (400) comprising:
a load sensor (402); and
a controller (406) communicatively coupled to the load sensor (402), wherein the controller (406) comprises a memory (410) and a processor (408), and the controller (406) is configured to receive a sensor signal from the load sensor (402);
**characterized in that**:
the load sensor (402) is configured to couple to the non-rotating element of the tine rotation mechanism (306) of the reel assembly (300), wherein the load sensor (402) is configured to output the sensor signal indicative of a mechanism load applied by the tines (302) to the non-rotating element of the tine rotation mechanism (306); and
wherein the controller (406) is configured to determine a crop load of crops acting on the tines (302) based on the mechanism load.

2. The reel assembly (300) of claim 1, wherein the tine rotation mechanism (306) comprises a cam and follower assembly (332), and the non-rotating element comprises a section (354) of a cam track (334) of the cam and follower assembly (332).

3. The reel assembly (300) of claim 2, wherein the monitoring system (400) comprises a second load sensor (404) configured to couple to a second section (356) of the cam track (334) of the cam and follower assembly (332), the second load sensor (404) is configured to output a second sensor signal indicative of a second mechanism load applied by the tines to the second section (356) of the cam track (334), the controller (406) is configured to receive the second sensor signal from the second load sensor (404), and the controller (406) is configured to determine a second crop load of the crops acting on the tines (302) based on the second mechanism load.

4. The reel assembly (300) of claim 3, wherein the controller (406) is configured to determine a maximum crop load based on the crop load and the second crop load.

5. The reel assembly (300) of any of claims 2-4, wherein:
the rotating structure (304) is configured to be driven in rotation;
a bat tube (305) is rotatably coupled to the rotating structure (304);
the tines (302) are coupled to the bat tube (305); and
the cam and follower assembly (332) are configured to drive the bat tube (305) to rotate relative to the rotating structure (304) in response to rotation of the rotating structure (304).

6. The reel assembly (300) of any of claims 2-5, wherein the load sensor (402) comprises a load cell configured to engage a roller (336) of the cam and follower assembly (332).

7. The reel assembly (300) of claim 1, wherein the tine rotation mechanism (306') comprises a parallel state assembly (366), and the non-rotating element comprises an alignment member of the parallel state assembly (366) configured to establish a circumferential position of a rotational axis (372) of an adjustment wheel (368) of the parallel state assembly (366) about a rotational axis (326) of the rotating structure (304').

8. The reel assembly (300) of claim 7, wherein the alignment member comprises a handle (378) configured to adjust the circumferential position of the rotational axis (372) of the adjustment wheel (368) about the rotational axis (326) of the rotating structure (304').

9. The reel assembly (300) of any of claims 7-8, wherein:
the rotating structure (304') is configured to be driven in rotation;
a plurality of bat tubes (305') is rotatably coupled to the rotating structure (304');
the tines (302') are coupled to the plurality of bat tubes (305');
the adjustment wheel (368) is configured to drive the plurality of bat tubes (305') to rotate relative to the rotating structure (304'); and
the parallel state assembly (366) comprises an engagement assembly (380) configured to couple to the alignment member.

10. The reel assembly (300) of any of claims 7-9, wherein the load sensor (402) comprises a load cell.

11. The reel assembly (300) of any of claims 1-10, wherein the monitoring system (400) comprises a user interface (412) communicatively coupled to the controller (406), the controller (406) is configured to output an output signal indicative of the crop load to the user interface (412), and the user interface (412) is configured to present an indication of the crop load in response to receiving the output signal.

12. The reel assembly (300) of any of claims 1-11, wherein the controller (406) is configured to control at least one parameter of the agricultural harvester (100) based on the crop load.

## Patentansprüche

1. Haspelanordnung (300) für eine landwirtschaftliche Erntemaschine (100), wobei die Haspelanordnung (300) einen Zinkenrotationsmechanismus (306) aufweist, wobei der Zinkenrotationsmechanismus (306) ein nicht-rotierendes Element aufweist, wobei der Zinkenrotationsmechanismus (306) dazu eingerichtet ist, Zinken (302) der Haspelanordnung (300) relativ zu einer rotierenden Struktur (304) der Haspelanordnung (300) rotierend anzutreiben, wobei die Haspelanordnung (300) ein Überwachungssystem (400) umfasst mit:
einem Lastsensor (402); und
einem Steuergerät (406), das kommunizierend mit dem Lastsensor (402) gekoppelt ist, wobei das Steuergerät (406) einen Speicher (410) und einen Prozessor (408) umfasst und wobei das Steuergerät (406) dazu eingerichtet ist, ein Sensorsignal von dem Lastsensor (402) zu empfangen;
**dadurch gekennzeichnet, dass**:
der Lastsensor (402) dazu eingerichtet ist, mit dem nicht-rotierenden Element des Zinkenrotationsmechanismus (306) der Haspelanordnung (300) gekoppelt zu sein, wobei der Lastsensor (402) dazu eingerichtet ist, das Sensorsignal auszugeben, das kennzeichnend für eine Mechanismuslast ist, die von den Zinken (302) auf das nicht-rotierende Element des Zinkenrotationsmechanismus (306) ausgeübt wird; und
wobei das Steuergerät (406) dazu eingerichtet ist, eine Erntegutlast von Erntegut, die auf die Zinken (302) wirkt, basierend auf der Mechanismuslast zu bestimmen.

2. Haspelanordnung (300) nach Anspruch 1, wobei der Zinkenrotationsmechanismus (306) eine Nocken- und Nockenstößelanordnung (332) aufweist, und wobei das nicht-rotierende Element einen Abschnitt (354) einer Nockenbahn (334) der Nocken- und Nockenstößelanordnung (332) aufweist.

3. Haspelanordnung (300) nach Anspruch 2, wobei das Überwachungssystem (400) einen zweiten Lastsensor (404) aufweist, der dazu eingerichtet ist, mit einem zweiten Abschnitt (356) der Nockenbahn (334) der Nocken- und Nockenstößelanordnung (332) gekoppelt zu sein, wobei der zweite Lastsensor (404) dazu eingerichtet ist, ein zweites Sensorsignal auszugeben, das kennzeichnend für eine zweite Mechanismuslast ist, die von den Zinken auf den zweiten Abschnitt (356) der Nockenbahn (334) ausgeübt wird, wobei das Steuergerät (406) dazu eingerichtet ist, das zweite Sensorsignal von dem zweiten Lastsensor (404) zu empfangen und wobei das Steuergerät (406) dazu eingerichtet ist, eine zweite Erntegutlast des Ernteguts, die auf die Zinken (302) wirkt, basierend auf der zweiten Mechanismuslast zu bestimmen.

4. Haspelanordnung (300) nach Anspruch 3, wobei das Steuergerät (406) dazu eingerichtet ist, eine maximale Erntegutlast basierend auf der Erntegutlast und der zweiten Erntegutlast zu bestimmen.

5. Haspelanordnung (300) nach einem der Ansprüche 2 bis 4, wobei:
die rotierende Struktur (304) dazu eingerichtet ist, rotatorisch angetrieben zu sein;
ein Schlagrohr (305) drehbar mit der rotierenden Struktur (304) verbunden ist;
die Zinken (302) mit dem Schlagrohr (305) verbunden sind; und
die Nocken- und Nockenstößelanordnung (332) dazu eingerichtet ist, das Schlagrohr (305) zum Rotieren relativ zu der rotierenden Struktur (304) in Reaktion auf eine Rotation der rotierenden Struktur (304) anzutreiben.

6. Haspelanordnung (300) nach einem der Ansprüche 2 bis 5, wobei der Lastsensor (402) eine Druckmessdose umfasst, die dazu eingerichtet ist, mit einer Rolle (336) der Nocken- und Nockenstößelanordnung (332) einzugreifen.

7. Haspelanordnung (300) nach Anspruch 1, wobei der Zinkenrotationsmechanismus (306') eine parallele Lageanordnung (366) aufweist und wobei das nicht-rotierende Element ein Ausrichtungselement der parallelen Lageanordnung (366) umfasst, das dazu eingerichtet ist, eine Umfangsposition einer Rotationsachse (372) eines Verstellrads (368) der parallelen Lageanordnung (366) um eine Rotationsachse (326) der rotierenden Struktur (304') zu schaffen.

8. Haspelanordnung (300) nach Anspruch 7, wobei das Ausrichtungselement einen Griff (378) aufweist, der dazu eingerichtet ist, die Umfangsposition der Rotationsachse (372) des Verstellrads (368) um die Rotationsachse (326) der rotierenden Struktur (304') zu verstellen.

9. Haspelanordnung (300) nach einem der Ansprüche 7 bis 8, wobei:
die rotierende Struktur (304') dazu eingerichtet ist, rotatorisch angetrieben zu sein;
eine Mehrzahl von Schlagrohren (305') drehbar mit der rotierenden Struktur (304') verbunden ist;
die Zinken (302') mit der Mehrzahl von Schlagrohren (305') verbunden sind;
das Verstellrad (368) dazu eingerichtet ist, die Mehrzahl von Schlagrohren (305') relativ zu der rotierenden Struktur (304') rotierend anzutreiben; und
die parallele Lageanordnung (366) eine Eingriffsanordnung (380) aufweist, die dazu eingerichtet ist, mit dem Ausrichtungselement verbunden zu sein.

10. Haspelanordnung (300) nach einem der Ansprüche 7 bis 9, wobei der Lastsensor (402) eine Druckmessdose umfasst.

11. Haspelanordnung (300) nach einem der Ansprüche 1 bis 10, wobei das Überwachungssystem (400) eine Benutzerschnittstelle (412) aufweist, die kommunikativ mit dem Steuergerät (406) gekoppelt ist, wobei das Steuergerät (406) dazu eingerichtet ist, ein Ausgabesignal, das kennzeichnend für die Erntegutlast ist, an die Benutzerschnittstelle (412) auszugeben, und wobei die Benutzerschnittstelle (412) dazu eingerichtet ist, eine Kennzeichnung der Erntegutlast in Reaktion auf ein Empfangen des Ausgabesignals anzuzeigen.

12. Haspelanordnung (300) nach einem der Ansprüche 1 bis 11, wobei das Steuergerät (406) dazu eingerichtet ist, zumindest einen Parameter der landwirtschaftlichen Erntemaschine (100) basierend auf der Erntegutlast zu steuern.

## Revendications

1. Un ensemble rabatteur (300) d'une moissonneuse agricole (100), l'ensemble rabatteur (300) incluant un mécanisme de rotation des dents (306), le mécanisme de rotation des dents (306) comprenant un élément non rotatif, dans lequel le mécanisme de rotation des dents (306) est configuré pour entraîner le pivotement des dents (302) de l'ensemble rabatteur (300) par rapport à une structure rotative (304) de l'ensemble rabatteur (300), l'ensemble rabatteur (300) comprenant un système de surveillance (400) comprenant :
un capteur de charge (402) ; et
un contrôleur (406) couplé de manière communicative au capteur de charge (402), dans lequel le contrôleur (406) comprend une mémoire (410) et un processeur (408), et le contrôleur (406) est configuré pour recevoir un signal de détection de la part du capteur de charge (402) ;
**caractérisé en ce que** :
le capteur de charge (402) est configuré pour se coupler à l'élément non rotatif du mécanisme de rotation des dents (306) de l'ensemble rabatteur (300), dans lequel le capteur de charge (402) est configuré pour émettre le signal de détection indiquant une charge au niveau du mécanisme appliquée par les dents (302) sur l'élément non rotatif du mécanisme de rotation des dents (306) ; et
dans lequel le contrôleur (406) est configuré pour déterminer une charge de récolte des récoltes agissant sur les dents (302) en fonction de la charge au niveau du mécanisme.

2. L'ensemble rabatteur (300) selon la revendication 1, dans lequel le mécanisme de rotation des dents (306) comprend un ensemble came et suiveur (332), et l'élément non rotatif comprend une section (354) d'un chemin de came (334) de l'ensemble came et suiveur (332).

3. L'ensemble rabatteur (300) selon la revendication 2, dans lequel le système de surveillance (400) comprend un second capteur de charge (404) configuré pour se coupler à une seconde section (356) du chemin de came (334) de l'ensemble came et suiveur (332), le second capteur de charge (404) est configuré pour émettre un second signal de détection indiquant une seconde charge au niveau du mécanisme appliquée par les dents sur la seconde section (356) du chemin de came (334), le contrôleur (406) est configuré pour recevoir le second signal de détection de la part du second capteur de charge (404), et le contrôleur (406) est configuré pour déterminer une charge d'une récolte dérobée des récoltes agissant sur les dents (302) en fonction de la seconde charge au niveau du mécanisme.

4. L'ensemble rabatteur (300) selon la revendication 3, dans lequel le contrôleur (406) est configuré pour déterminer une charge de récolte maximale en fonction de la charge de récolte et de la charge de la récolte dérobée.

5. L'ensemble rabatteur (300) selon l'une quelconque des revendications 2 à 4, dans lequel :
la structure rotative (304) est configurée pour être entraînée en rotation ;
un tube de scellement à crans (305) est couplé de manière rotative à la structure rotative (304) ;
les dents (302) sont couplées au tube de scellement à crans (305) ; et
l'ensemble came et suiveur (332) est configuré pour entraîner le tube de scellement à crans (305) en rotation par rapport à la structure rotative (304) en réponse à la rotation de la structure rotative (304).

6. L'ensemble rabatteur (300) selon l'une quelconque des revendications 2 à 5, dans lequel le capteur de charge (402) comprend une cellule de charge configurée pour s'engager dans un rouleau (336) de l'ensemble came et suiveur (332).

7. L'ensemble rabatteur (300) selon la revendication 1, dans lequel le mécanisme de rotation des dents (306') comprend un ensemble parallèle (366), et l'élément non rotatif comprend un élément d'alignement de l'ensemble parallèle (366) configuré pour établir une position circonférentielle d'un axe de rotation (372) d'une molette de réglage (368) de l'ensemble parallèle (366) autour d'un axe de rotation (326) de la structure rotative (304').

8. L'enrouleur (300) de la revendication 7, dans lequel l'élément d'alignement comprend une poignée (378) configurée pour ajuster la position circonférentielle de l'axe de rotation (372) de la roue d'ajustement (368) autour de l'axe de rotation (326) de la structure rotative (304').

9. L'ensemble rabatteur (300) selon l'une quelconque des revendications 7 à 8, dans lequel :
la structure rotative (304') est configurée pour être entraînée en rotation ;
une pluralité de tubes de scellement à crans (305') est couplée de manière rotative à la structure rotative (304') ;
les dents (302') sont couplées à la pluralité de tubes de scellement à crans (305') ;
la molette de réglage (368) est configurée pour entraîner la rotation de la pluralité de tubes de scellement à crans (305') par rapport à la structure rotative (304') ; et
l'ensemble parallèle (366) comprend un ensemble de mise en prise (380) configuré pour se coupler à l'élément d'alignement.

10. L'ensemble rabatteur (300) selon l'une quelconque des revendications 7 à 9, dans lequel le capteur de charge (402) comprend une cellule de mesure.

11. L'ensemble rabatteur (300) selon l'une quelconque des revendications 1 à 10, dans lequel le système de surveillance (400) comprend une interface utilisateur (412) couplée de manière communicative au contrôleur (406), le contrôleur (406) est configuré pour émettre un signal de sortie indiquant la charge de récolte à l'interface utilisateur (412), et l'interface utilisateur (412) est configurée pour présenter une indication de la charge de récolte en réponse à la réception du signal de sortie.

12. L'ensemble rabatteur (300) de l'une quelconque des revendications 1 à 11, dans lequel le contrôleur (406) est configuré pour commander au moins un paramètre de la moissonneuse agricole (100) en fonction de la charge de récolte.
